# FASCICULE DE BREVET EUROPEEN

(11) **EP 3 668 732 B1**
(45) Date de publication et mention de la délivrance du brevet: **25.08.2021**
(21) Numéro de dépôt: 18755516.4
(22) Date de dépôt: 17.07.2018
(51) Int. Cl.: B60G 21/05

(54) **SYSTEME DE TRAVERSE DE VEHICULE AUTOMOBILE AVEC DES INSERTS POUR UNE BARRE DE GUIDAGE TRANSVERSAL**
KRAFTFAHRZEUGQUERTRÄGERSYSTEM MIT EINSÄTZEN FÜR EINE QUERFÜHRUNGSSTANGE
MOTOR VEHICLE CROSS MEMBER SYSTEM HAVING INSERTS FOR A TRANSVERSE GUIDE BAR

(30) Priorité: 17.08.2017 FR 1757714
(43) Date de publication de la demande: 24.06.2020
(73) Titulaire: PSA Automobiles SA, 78300 Poissy (FR)
(72) Inventeur: MINISINI, Antoine, 25230 Seloncourt (FR); POINSOT, Claude, 25200 Montbeliard (FR)
(86) Numéro de dépôt international: PCT/FR2018/051811
(87) Numéro de publication internationale: WO 2019/034814

(56) Documents cités:
- FR-A1- 2 892 974
- JP-A- H06 262 920
- JP-A- H06 286 444
- JP-A- H08 253 010
- JP-B2- 4 276 566

## Description

La présente invention concerne un système de traverse pour un train arrière de véhicule automobile, équipé d'un support de barre de guidage transversal de cette traverse, ainsi qu'un véhicule automobile comportant un tel système de traverse.

Un type de train arrière de véhicule connu, présenté notamment par le document FR-A1-2892974, comporte une traverse guidée latéralement par une barre transversale, appelée aussi barre « Panhard », qui est disposée sensiblement horizontalement.

La barre de guidage fixée par des pivots d'un côté à la caisse du véhicule et de l'autre à une extrémité de la traverse, réalise en traversant le véhicule un guidage de cette traverse dans la direction transversale du véhicule lors des débattements de la suspension, en reprenant les efforts latéraux en particulier dans les virages.

La barre de guidage doit être disposée sensiblement horizontalement de manière à rester proche de la direction horizontale lors des débattements de la suspension. L'extrémité de la barre de guidage fixée sur la traverse présente alors un mouvement sensiblement vertical, avec une composante horizontale quasiment nulle ce qui assure un bon guidage de cette traverse.

Pour des raisons d'encombrement, un autre type de traverse connu, présenté notamment par le document JP-B2-4276566, comporte une traverse comprenant à une extrémité un support formé en tôle, s'étendant vers l'arrière, qui est soudée sur la face arrière de cette traverse. L'extrémité du support reçoit le pivot de la barre de guidage transversal, qui se trouve ainsi légèrement décalée de la traverse.

Toutefois le support réalisé en tôle et soudé sur la traverse réalisée aussi en tôle, peut poser des problèmes de résistance, notamment au niveau de la soudure entre le support et la traverse, afin de résister aux efforts latéraux transmis par la barre de guidage qui peuvent être importants.

Les contraintes de volume disponible sous la caisse du véhicule, et la nécessité de disposer la barre de guidage proche de la direction horizontale, peuvent imposer une certaine longueur au support.

En particulier un support relativement long constitue un bras de levier multipliant la force transversale venant de la barre de guidage, en formant un couple d'effort alterné suivant les directions des virages, qui s'applique sur la liaison entre le support et la traverse. La tenue en fatigue des cordons de soudure peut être insuffisante, notamment pour des soudures sur une traverse déformable réalisée en tôle.

Pour y remédier il est connu de renforcer la tôle de la traverse au niveau de la liaison avec le support, notamment en ajoutant des épaisseurs de tôle. Toutefois ce procédé augmente la masse du véhicule, et modifie la flexibilité en torsion de cette traverse suivant son axe longitudinal, qui a une grande importance pour les trains arrière à traverse déformable.

D'une manière générale le problème est de fixer un support sur une traverse, recevant des efforts latéraux importants transmis à cette traverse, qui peuvent venir d'une barre de guidage transversal, ou de tout autre élément comme par exemple d'un élément de suspension.

La présente invention a notamment pour but d'éviter ces inconvénients de la technique antérieure.

Elle propose à cet effet un système de traverse de train arrière de véhicule automobile comportant une traverse en tôle formant dans une section perpendiculaire à sa longueur un « U » ouvert, équipée d'un support prévu pour recevoir un effort transmis à cette traverse, ce système étant remarquable en ce qu'il comporte au moins deux inserts tubulaires traversant la traverse, une entretoise ajustée dans cette traverse, et des vis de fixation du support sur la traverse qui sont ajustées dans ces inserts.

Un avantage de ce système de traverse est que les vis, qui peuvent être serrées fortement grâce à l'entretoise empêchant un écrasement de la traverse au niveau de ces vis, donnent une grande stabilité au support qui peut résister à des forces alternées importantes s'appliquant à son extrémité. De plus les inserts maintiennent en position l'entretoise avant la fixation du support.

En particulier le support peut recevoir l'extrémité d'une barre de guidage transversal, appliquant des efforts transversaux alternés élevés.

Le système de traverse selon l'invention peut comporter de plus une ou plusieurs des caractéristiques suivantes, qui peuvent être combinées entre elles.

Avantageusement, l'entretoise ajustée entre les deux ailes de la section en « U » de la traverse, est traversée par les inserts tubulaires.

Dans ce cas, la traverse comporte avantageusement deux méplats disposés chacun sur une aile de la section en « U » au niveau de l'entretoise.

Avantageusement, chaque insert tubulaire est serti entre les deux faces extérieures de la traverse, de manière à former un serrage de cette traverse.

Dans ce cas, l'insert tubulaire peut comporter à une extrémité une collerette, et à l'autre extrémité recevant le support le sertissage formé dans l'épaisseur de la tôle de la traverse.

Avantageusement, le système de traverse comporte deux vis de fixation alignées dans la direction transversale du véhicule qui est la direction perpendiculaire au sens de marche de ce véhicule, et disposées chacune d'un côté du support.

Dans ce cas, avantageusement le support comporte de chaque côté un bossage recevant une vis de fixation qui traverse ce bossage.

En particulier la traverse peut être déformable, en présentant une flexibilité en torsion suivant la direction de sa longueur.

L'invention a aussi pour objet un véhicule automobile équipé d'un système de traverse comprenant une traverse de train arrière comportant un support, remarquable en ce que ce système de traverse comporte l'une quelconque des caractéristiques précédentes.

En particulier, le véhicule automobile peut comporter une barre de guidage dans la direction transversale du véhicule, fixée à l'extrémité du support.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente un système de traverse selon l'invention pour un train arrière à traverse déformable, qui est équipé d'une barre de guidage transversal ;
- la figure 2 est une vue de détail du support de cette barre transversale ;
- la figure 3 est une vue en coupe de ce support, suivant un plan de coupe passant par l'axe des vis de fixation du support ; et
- les figures 4 et 5 sont des vues de détail de l'entretoise insérée dans la traverse sous le support, présentées respectivement en perspective et en coupe suivant un plan de coupe passant par l'axe des vis de fixation.

Dans la description qui suit la direction longitudinale du véhicule est définie comme étant la direction du sens de marche de ce véhicule, suivant sa longueur, et la direction transversale comme la direction perpendiculaire à cette direction longitudinale qui se trouve dans un plan horizontal.

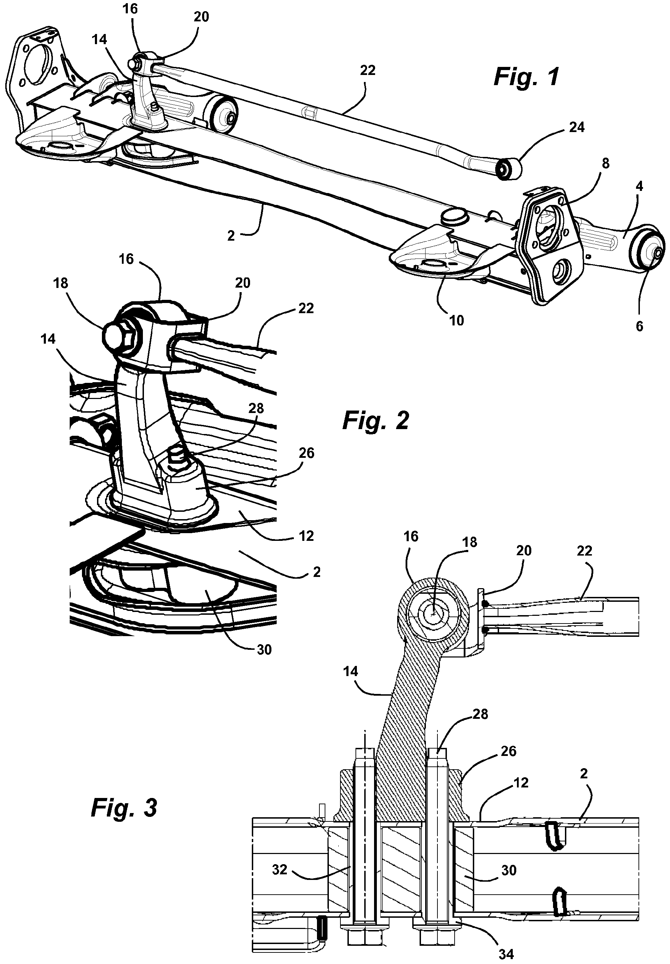

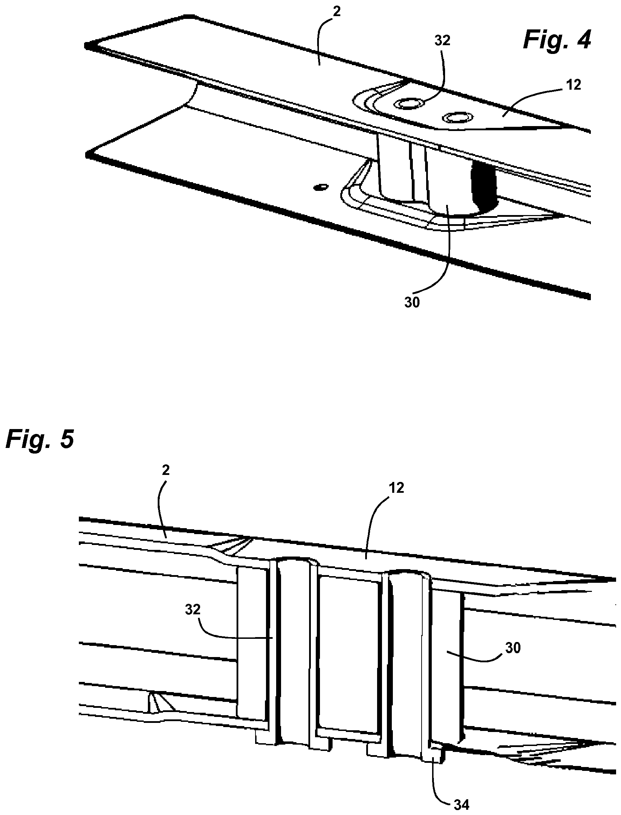

Les figures 1, 2, 3, 4 et 5 présentent une traverse de train arrière 2 formée dans une tôle, disposée suivant la direction transversale du véhicule, présentant une section perpendiculaire à sa longueur sensiblement constante formant un « U » posé horizontalement, dont l'ouverture est tournée vers l'arrière.

Chaque extrémité de la traverse 2 comporte vers l'avant un bras 4 disposé dans la direction longitudinale du véhicule, présentant à son extrémité avant une articulation 6 montée sur un bloc élastique, recevant une vis de fixation sur la caisse du véhicule disposée dans la direction transversale du véhicule.

Chaque extrémité de la traverse comporte une tôle verticale 8 recevant le moyeu d'une roue arrière, et vers l'arrière un peu avant cette extrémité, une coupelle sensiblement horizontale 10 recevant la base d'un ressort de suspension.

La traverse 2 déformable présente une certaine flexibilité en torsion suivant sa direction longitudinale propre, afin d'assurer une fonction anti-dévers qui applique un effort de rappel lors des différences de débattement des suspensions de chaque côté du véhicule. Cette flexibilité dépendant de l'épaisseur de la tôle de la traverse 2 et de la forme de sa section, est calculée pour obtenir une raideur souhaitée.

La traverse 2 présente du côté gauche, juste avant la fixation de la coupelle 10, deux méplats 12 formés chacun sur une aile de sa section, parallèles entre eux. Les méplats 12 s'arrêtent vers l'arrière avant le bord des ailes de la traverse 2, de façon à laisser une section constante au niveau de ce bord arrière.

Un support 14 allongé verticalement, présente une base plane en appui sur le méplat supérieur 12 de la traverse 2, qui est serré par deux vis 28 traversant cette traverse, écartées dans la direction transversale du véhicule, et alignées suivant cette direction.

L'extrémité supérieure du support 14 comporte un anneau 16 présentant un axe disposé sensiblement dans la direction longitudinale du véhicule, recevant une vis de fixation 18 d'une chape 20 formée à l'extrémité d'une barre de guidage transversal 22. L'autre extrémité de la barre de guidage 22 comporte un anneau 24 présentant un axe disposé dans la direction longitudinale, prévu pour être inséré dans une chape fixée sous la caisse du véhicule.

De cette manière la traverse 2 est guidée transversalement par la barre de guidage 22 résistant aux efforts transversaux dans les virages, qui peut suivre les débattements de la suspension grâce à son montage avec des chapes d'extrémité, tout en restant proche de la direction horizontale.

La longueur de la barre de guidage 22 donne une très faible variation de la distance transversale entre ses extrémités, ce qui maintient la géométrie du train arrière.

Chaque vis 28 de fixation du support 14 engagée par le dessous, est ajustée dans un insert tubulaire 32 qui est lui-même ajusté dans un perçage de chaque aile de la traverse 2, et entre ces ailes dans un perçage d'une entretoise 30. L'extrémité supérieure filetée de chaque vis 28 est engagée dans un perçage taraudé traversant un bossage 26 disposé de chaque côté du support 14.

L'entretoise 30 comporte deux surfaces planes parallèles ajustées à l'intérieur des méplats 12 de la traverse 2, et un contour formant deux lobes centrés chacun sur une vis 28, de manière à réduire sa masse.

L'entretoise 30 maintient un espacement entre les deux méplats 12 en présentant une rigidité élevée, permettant un serrage important des vis 28 traversant la traverse 2.

Chaque insert 32 comporte une collerette 34 venant en dessous du méplat inférieur 12, puis une partie tubulaire ajustée dans un perçage de chaque méplat, et dans un perçage de l'entretoise 30 avec un petit jeu pour faciliter l'introduction. L'extrémité supérieure de l'insert 32 est sertie sur le méplat supérieur 12, en réalisant un épanouissement de cette extrémité dans l'épaisseur de la tôle autour du perçage de ce méplat.

De cette manière on introduit facilement l'entretoise 30 entre les deux méplats 12 en prévoyant un petit jeu. Ensuite on introduit les deux inserts 32 par le bas dans la traverse 2, puis on sertit l'extrémité supérieure de ces inserts en réalisant un serrage axial des tôles de la traverse ce qui supprime ce jeu.

On obtient un serrage axial des deux méplats 12 et de l'entretoise 30, entre la collerette inférieure 34 et le sertissage supérieur, qui garantit le placage et le serrage de cet ensemble avant le montage des vis 28 du support 14. On réalise un sous-ensemble prêt au montage sur le véhicule.

On notera que le serrage de l'ensemble des composants superposés, comprenant pour chaque vis 28 la collerette 34 de l'insert 32, les deux méplats 12 de la traverse 2 et les deux faces de l'entretoise 30, est important pour garantir le maintien du couple de serrage de ces vis dans le temps.

De plus après un dévissage des vis 28 en cas d'intervention en après-vente nécessitant un démontage du support 14, les méplats 12 de la traverse 2 restent serrés sur l'entretoise 30 ce qui facilite le remontage.

L'écartement dans la direction transversale des deux vis 28 donne une grande stabilité latérale au support 14, dans la direction où il est soumis à des contraintes importantes venant de la barre de guidage 22.

La tenue des vis 28 en fatigue peut être supérieure à celle d'une soudure pratiquée suivant l'art antérieur pour fixer le support 14 sur la traverse 2, ce qui assure la tenue dans le temps de ce support.

De plus l'effort de placage de la tôle des méplats 12 sur l'entretoise 30 étant donné par les inserts 32, cet effort n'est pas délivré par les vis 28 ce qui permet de les calculer au plus juste.

On réalise ainsi au préalable un sous-ensemble formé par la traverse 2 ayant reçu l'entretoise 30 maintenue par les deux inserts 32, pouvant être facilement manipulé sans risquer de perdre cette entretoise, qui peut recevoir par la suite de manière simple le support 14 par le serrage des deux vis 28.

Le système de traverse selon l'invention permet de s'adapter facilement et de manière économique à différentes traverses déformables 2 présentant une même hauteur totale de sa section, réalisées avec des épaisseurs de tôle variées afin d'adapter sa raideur en torsion suivant sa direction longitudinale propre.

Dans ce cas on conserve les mêmes inserts 32 et les mêmes vis 28, et on réduit la hauteur de l'entretoise 30 en fonction de l'épaisseur des tôles de la traverse 2 afin d'ajuster cette entretoise à l'intérieur de la traverse.

On obtient ainsi un système modulaire qui utilise les mêmes postes de fabrication comportant un procédé de fabrication unique et robuste, pour réaliser le sertissage des inserts 32 et le vissage des vis 28, avec différentes épaisseurs de tôle des traverses 2.

## Revendications

1. Système de traverse de train arrière de véhicule automobile comportant une traverse (2) en tôle formant dans une section perpendiculaire à sa longueur un « U » ouvert, équipée d'un support (14) prévu pour recevoir un effort transmis à cette traverse (2), **caractérisé en ce qu'**il comporte au moins deux inserts tubulaires (32) traversant la traverse (2), une entretoise (30) ajustée dans cette traverse (2), et des vis de fixation (28) du support (14) sur la traverse (2) qui sont ajustées dans ces inserts (32).

2. Système de traverse selon la revendication 1, **caractérisé en ce que** l'entretoise (30) ajustée entre les deux ailes de la section en « U » de la traverse (2), est traversée par les inserts tubulaires (32).

3. Système de traverse selon la revendication 2, **caractérisé en ce que** la traverse (2) comporte deux méplats (12) disposés chacun sur une aile de la section en « U » au niveau de l'entretoise (30).

4. Système de traverse selon l'une quelconque des revendications précédentes, **caractérisé en ce que** chaque insert tubulaire (32) est serti entre les deux faces extérieures de la traverse (2), de manière à former un serrage de cette traverse (2).

5. Système de traverse selon la revendication 4, **caractérisé en ce que** l'insert tubulaire (32) comporte à une extrémité une collerette (34), et à l'autre extrémité recevant le support (14) le sertissage formé dans l'épaisseur de la tôle de la traverse (2).

6. Système de traverse selon l'une quelconque des revendications précédentes, **caractérisé en ce qu'**il comporte deux vis de fixation (28) alignées dans la direction transversale du véhicule qui est la direction perpendiculaire au sens de marche de ce véhicule, et disposées chacune d'un côté du support (14).

7. Système de traverse selon la revendication 6, **caractérisé en ce que** le support (14) comporte de chaque côté un bossage (26) recevant une vis de fixation (28) qui traverse ce bossage (26).

8. Système de traverse selon l'une quelconque des revendications précédentes, **caractérisé en ce que** la traverse (2) est déformable, en présentant une flexibilité en torsion suivant la direction de sa longueur.

9. Véhicule automobile équipé d'un système de traverse comprenant une traverse (2) de train arrière comportant un support (14), **caractérisé en ce que** ce système de traverse est selon l'une quelconque des revendications précédentes.

10. Véhicule automobile selon la revendication 9, **caractérisé en ce qu'**il comporte une barre de guidage (22) dans la direction transversale du véhicule, fixée à l'extrémité du support (14).

## Patentansprüche

1. Querträgersystem für die Hinterachse eines Kraftfahrzeugs, umfassend ein Querelement (2) in Blattform in einem Abschnitt senkrecht zu seiner Länge eines « U » offen, ausgestattet mit einem Träger (14) angepasst ist zu empfangen, eine Kraft zu übertragen diesen Querträger (2), **dadurch gekennzeichnet,**
**dass** sie aus mindestens zwei den Querträger (2) durchsetzenden rohrförmigen Einsätzen (32), einem in diesem Querträger (2) angebrachten Distanzstück (30) und Befestigungsschrauben (28) des Trägers (14) besteht) am Querträger (2) die in diese Einsätze (32) eingepasst sind.

2. Querträgersystem nach Anspruch 1, **dadurch gekennzeichnet, dass** der zwischen den beiden Flügeln des "U" Profils des Querträgers (2) angebrachte Abstandhalter (30) von den rohrförmigen Einsätzen (32) durchquert wird.

3. Querträgersystem nach Anspruch 2, **dadurch gekennzeichnet, dass** der Querträger (2) zwei Abflachungen (12) aufweist, die jeweils an einem Flügel des "U" Profils in Höhe des Abstandshalters (30) angeordnet sind.

4. Querträgersystem nach einem der vorhergehenden
Ansprüchen, gekennzeichnet in, daß jeder rohrförmige Einsatz (32) zwischen den beiden Außenflächen der Schwelle (2) festgelegt ist, um so eine Klemmung bilden von der Traverse (2).

5. Querträgersystem nach nach Anspruch 4, **dadurch gekennzeichnet, daß** der rohrförmige Einsatz (32) ein Flansch (34) an einem Ende und am anderen Ende den Trägers (14), die die in der Dicke des Querelementes ausgebildet Kräuselung Blatt (2).

6. Querträgersystem nach einem der vorhergehenden Ansprüchen, **dadurch gekennzeichnet, daß** sie zwei Befestigungsschrauben (28) in der Querrichtung ausgerichtet des Fahrzeugs, die die Richtung senkrecht zur Fahrtrichtung des Fahrzeugs ist, und angeordnet, die jeweils auf einem Seite der Stütze (14).

7. Querträgersystem nach Anspruch 6, **dadurch gekennzeichnet, daß** der Träger (14) umfasst, die auf jeder Seite einen Vorsprung (26) eine Befestigungsschraube (28), die durch diese Vorsprungsaufnahme (26).

8. Querträgersystem nach einem der vorhergehenden Ansprüche, **dadurch gekennzeichnet, dass** der Querträger (2) verformbar ist, mit Torsionsflexibilität in Richtung seiner Länge.

9. Kraftfahrzeug ausgestattet mit einem System von Quer com ein Querstück unter (2) Hinterachse, umfassend einen Träger (14), **dadurch gekennzeichnet, daß** dieses System ist durch nach einem der vorhergehenden Ansprüchen.

10. Kraftfahrzeug nach Anspruch 9, **dadurch gekennzeichnet, dass** es eine am Ende des Trägers (14) befestigte Führungsstange (22) in Fahrzeugquerrichtung aufweist.

## Claims

1. Motor vehicle rear axle cross member system comprising a cross member (2) in sheet form in a section perpendicular to its length a " U " open, equipped with a support (14) adapted to receive a force transmitted to this cross member (2), **characterized in that** it comprises at least two tubular inserts (32) passing through the cross member (2), a spacer (30) fitted in this cross member (2), and fixing screws (28) of the support (14) on the cross member (2) which are fitted in these inserts (32).

2. Cross member system according to claim 1, **characterized in that** the spacer (30) fitted between the two wings of the " U " section of the cross member (2), is traversed by the tubular inserts (32).

3. Cross member system according to claim 2, **characterized in that** the cross member (2) comprises two flats (12) each arranged on a wing of the " U " section at the level of the spacer (30).

4. Cross member system according to any one of the preceding claims, **characterized in that** each tubular insert (32) is set between the two outer faces of the sleeper (2), so as to form a clamping of the crossmember (2).

5. Cross member system according to claim 4, **characterized in that** the tubular insert (32) comprises at one end a flange (34), and at the other end receiving the support (14) the crimp formed in the thickness of the cross member sheet (2).

6. Cross member system according to any one of the preceding claims, **characterized in that** it comprises two fixing screws (28) aligned in the transverse direction of the vehicle which is the direction perpendicular to the driving direction of the vehicle and arranged each on one side of the support (14).

7. Cross member system according to claim 6, **characterized in that** the support (14) comprises on each side a boss (26) receiving a fastening screw (28) passing through this boss (26).

8. Cross member system according to any one of the preceding claims, **characterized in that** the crossmember (2) is deformable, presenting a torsional flexibility according to the a direction of its length.

9. Motor vehicle equipped with a system of cross com taking a crosspiece (2) rear axle comprising a support (14), **characterized in that** this system is through according to any preceding claim.

10. Motor vehicle according to claim 9, **characterized in that** it comprises a guide bar (22) in the transverse direction of the vehicle, fixed to the end of the support (14).
